Europäisches Patentamt

European Patent Office

Office européen des brevets

(11) Veröffentlichungsnummer: **0 379 727**

**A2**

(12) **EUROPÄISCHE PATENTANMELDUNG**

(21) Anmeldenummer: **89123952.7**

(22) Anmeldetag: **27.12.89**

(51) Int. Cl.5: **B29C 47/92**

(30) Priorität: **27.01.89 DE 3902405**

(43) Veröffentlichungstag der Anmeldung:
**01.08.90 Patentblatt 90/31**

(84) Benannte Vertragsstaaten:
**CH DE FR GB IT LI**

(71) Anmelder: **PAUL TROESTER MASCHINENFABRIK**
**Am Brabrinke 1-4**
**D-3000 Hannover 81(DE)**

(72) Erfinder: **Gohlisch, Hans-Joachim, Dipl.-Ing.**
**Am Lindenhofe 32 F**
**D-3000 Hannover 81(DE)**

(74) Vertreter: **Junius, Walther, Dr.**
**Wolfstrasse 24**
**D-3000 Hannover-Waldheim(DE)**

(54) **Verfahren und Vorrichtung zur Herstellung dünnwandiger Schläuche aus Kautschuk- und/oder Kunststoffmischungen.**

(57) Die Erfindung betrifft eine Vorrichtung und ein Verfahren zur Herstellung dünnwandiger Schläuche aus Kautschuk-und/oder Kunststoffmischungen durch Extrudieren und Abziehen, bei dem mit Puder beladene Luft in das Innere des Schlauches ständig eingeführt und nach Ablagern des größten Puderanteils an die Schlauchinnenwand wieder herausgeführt wird. Es ist die Aufgabe der Erfindung, die Dimensionen des extrudierten Schlauchrohlings über lange Betriebszeiten konstant zu halten und dadurch einerseits Material einzusparen, andererseits die Qualität des erzeugten Schlauches zu erhöhen. Die Erfindung besteht darin, daß das schlauchförmige, luftgefüllte Extrudat hinter der Abzugsvorrichtung im Bereich der Breitenmeßvorrichtung durch Formwerkzeuge geführt ist, und daß der Ausgang der Breitenmeßvorrichtung mit einer Regelvorrichtung für die Menge der in den extrudierten Schlauch eingeführten und/oder aus dem extrudierten Schlauch durch die Abluftvorrichtung abgesaugten Luft und/oder der Geschwindigkeit der Abzugsvorrichtung verbunden ist.

FIG.1

# Verfahren und Vorrichtung zur Herstellung dünnwandiger Schläuche aus Kautschuk- und/oder Kunststoffmischungen

Die Erfindung betrifft eine Vorrichtung und ein Verfahren zur Herstellung dünnwandiger Schläuche aus Kautschuk-und/oder Kunststoffmischungen durch Extrudieren und Abziehen, bei dem mit Puder beladene Luft in das Innere des Schlauches ständig eingeführt und nach Ablagern des größten Puderanteils an die Schlauch-Innenwand wieder herausgeführt wird.

Bei der Fertigung von Schläuchen aus Mischungen von Kautschuk und/oder thermoplastischen Kunststoffen für die Verwendung als Fahrrad- oder Motorfahrzeugschläuche werden zunächst lange Schlauchrohlinge kontinuierlich extrudiert. Diese Extrusion erfolgt aus Spritzköpfen, die entweder einen oder parallel hierzu noch weitere Schlauchrohlinge erzeugen. Zur Herstellung der Fahrrad- oder Motorfahrzeugschläuche wird der lange Schlauchrohling auf Länge geschnitten, in eine Kreisform gebogen und dann zusammengesetzt. Moderne Fertigungs- und Vulkanisiermethoden sehen ein Zusammensetzen auf Stoß an der Schnittstelle vor. Bei dieser Verbindung der Enden des geschnittenen Rohlings ergibt sich gegenüber früher hergestellten gemufften Verbindungen ein geringerer Materialverbrauch und ein homogenerer Schlauch, der eine höhere Laufruhe im Betrieb aufweist.

Voraussetzung für diese Fertigung ist es, daß die Fertigungsgenaugkeit jedes geschnittenen extrudierten Schlauchrohlings extrem hoch ist, damit die stumpfe Verbindung auf Stoß haltbar, aber auch überhaupt möglich ist. Durchmesser und Wandstärken müssen für diese Verbindung an den beiden Enden des geschnittenen Schlauchrohlings sehr exakt sein. Bisher wird diese hohe Exaktheit durch Handsteuerung der Herstellungsanlage für jeden einzelnen geschnittenen Schlauchrohling aufgrund großer Erfahrung der Bedienungspersonen erreicht. Nicht erreicht wird hingegen, daß die Wandstärkendicke und die Querschnittsdimensionen bei der Herstellung von Tausenden von Schlauchrohlingen für alle Schlauchrohlinge gleich bleibt, hier sind z.B. nach der Herstellung von je hundert geschnittenen Schlauchrohlingen erhebliche Dimensionsunterschiede zwischen dem ersten, dem hundertsten und dem fünfhundertsten Schlauchrohling feststellbar. Das ist für die Verwendung der Schläuche in den Fahrzeugreifen bedeutungslos, nicht aber für eine wirtschaftliche Produktion.

Schläuche für diesen Verwendungszweck sind aus mancherlei Gründen, hauptsächlich der Materialkosten und kurzer Vulkanisierzeiten wegen, sehr dünnwandig ausgeführt. Das macht die Konstanthaltung der Wandungsstärken und der Querschnittsdimensionen über lange Extrusionszeiten noch schwieriger. Hinzu kommt, daß es insbesondere für dünnwandige Schlauchrohlinge unerläßlich ist, die Mischun gen vor dem Verlassen des Extruders zu reinigen, d.h. durch Siebe, Strainer, zu pressen, "damit kein Fertigungsausschuß durch fast unvermeidliche Mischungsverunreinigungen entsteht. Ein einziges Sandkorn in einer dünnen Schlauchwand kann verheerende Folgen haben. Aus diesem Grunde ist man in neuerer Zeit von der früher üblichen Mischungsvorwärmung auf Walzwerken abgegangen, um die mit der stufenweisen Arbeit bei der Extrusion verbundenen Mischungsverschmutzungen zu vermeiden und um die Gleichmäßigkeit des Produktionsablaufes zu erhöhen.

Die zur Verarbeitung kommenden vulkanisierbaren bzw. vernetzbaren Mischungen aus Kautschuk und/oder Kunststoff sind bei der Extrusion sehr weich, stark klebrig und auch temperaturempfindlich. Damit der extrudierte Schlauchrohling, der sich sofort nach dem Extrudieren oval verformt und das Bestreben hat, sich flach zu legen, nicht zusammenklebt, wird dieser Schlauchrohling von innen mit Luft gestützt und dabei auch gepudert. Dazu wird ein Luft-Pudergemisch durch den Dorn des Spritzkopfes des Extruders kontinuierlich zugeführt. Überschüssige Luft muß durch einen parallelen Weg wieder aus dem Inneren des Schlauchrohlings herausgeführt werden, um ein Aufblasen beim Extrudieren zu verhindern. Ein großes Problem besteht dabei in der Konstanthaltung der Stützluftmenge im Schlauch, da der Überdruck gegenüber der Außenluft nur wenige Hekto-Pascal betragen darf und mit größter Genauigkeit konstant gehalten werden muß. Bisher verwendet man für diese Konstanthaltung feinst arbeitende Druckhalteventile und insbesondere feinfühlig arbeitende Wasservorlagen.

Die Konstanthaltung der Stützluft reicht aber für sich allein nicht aus, da sich die Produktionsparameter während des Betriebes laufend bereits dadurch ändern, daß sich die Siebe allmählich mit aufgefangenen Schmutzteilchen zusetzen und dadurch weniger Material durch die Siebe hindurchtritt und sich vor den Sieben ein größerer Materialdruck aufbaut, der Temperaturveränderungen des Materials zur Folge hat, die hinwiederum zu Viskositätsänderungen der Masse u.a. führen und diese bei gleichbleibendem Schlauch-Innendruck zu Schlauchdurchmesser-Änderungen führen.

Die Erfindung vermeidet die Nachteile des Standes der Technik. Es ist die Aufgabe der Erfindung, die Dimensionen des extrudierten Schlauchrohlings über lange Betriebszeiten konstant zu halten und dadurch einerseits Material einzusparen, andererseits die Qualität des erzeugten Schlauches zu erhöhen.

Die Erfindung besteht darin, daß man dem extrudierten, abgezogenen, luftgefüllten Schlauch zumindest über einen Teil seines Umfanges eine bestimmte Form gibt und an den nicht mit den Formwerkzeugen in Berührung befindlichen Teilen z.B. eine Höhen-, Durchmesser-oder Breitenmessung vornimmt, und daß man das Ergebnis dieser Messung der Regelung des Stützluftdruckes und/oder der Abzugsgeschwindigkeit zugrundelegt.

Hierzu dient eine Vorrichtung, die sich dadurch auszeichnet, daß die Meßvorrichtung für die Messung der Breite und/oder Höhe ausgelegt ist, daß das schlauchförmige, luftgefüllte Extrudat hinter der Abzugsvorrichtung im Bereich der Meßvorrichtung durch Formwerkzeuge geführt ist, und daß der Ausgang der Meßvorrichtung mit einer Regelvorrichtung für die Menge der in den extrudierten Schlauch eingeführten und/oder aus dem extrudierten Schlauch durch die Abluftvorrichtung abgesaugten Luft und/oder der Geschwindigkeit der Abzugsvorrichtung verbunden ist.

Der extrudierte Schlauchrohling, der an sich unmittelbar nach seiner Extrusion und seinem Abzug noch ein sehr labiles Gebilde ist, und zudem mit Luft gestützt ist, läßt sich mit normalen Meßvorrichtungen nur schlecht in seinen Dimensionen messen. Gibt man hingegen diesem Schlauchrohling eine bestimmte geometrische Form, so kann man mit einer Höhen-und/oder Breitenmeßvorrichtung, die z.B. mit einem Photodiodenarray arbeiten kann, den Umfang des Schlauchrohlings messen. Diesen Umfang des Schlauchrohlings kann man konstant halten, wenn man das Ergebnis der Höhen- und/oder Breitenmessung einer Steuerung für den Druck der in den extrudierten Schlauch eingeführten Luft zugrunde legt und/oder einer Steuerung der Geschwindigkeit der Abzugsvorrichtuig zugrunde legt. Ist der Umfang des extrudierten Schlauchrohlings zu klein, so kann man ihn durch Erhöhung des Druckes der Stützluft aufweiten (und umgekehrt), man kann aber auch durch Verlangsamung der Abzugsvorrichtung eine ähnliche Wirkung erzielen. Mit dieser Regelung gelingt es, über unbegrenzt lange Betriebszeiten die Umfangsdimensionen des Schlauches exakt konstant zu halten, auch bei Änderungen des Materialdurchsatzes durch die sich allmählich zusetzenden Siebe.

Um auch die Wandstärke des extrudierten Schlauchrohlinges über lange Betriebszeiten völlig konstant zu halten, ist es zweckmäßig, wenn man das Längengewicht des extrudierten Schlauches mißt, mit einem Sollwert vergleicht und die Abweichung der Steuerung der Abzugsgeschwindigkeit und/oder der Extruderdrehzahl zugrundelegt.

Hierzu ist zwischen der Abzugsvorrichtung und der Höhen-und/oder Breitenmeßvorrichtung eine Längengewichtswaage angeordnet, deren Ausgangssignale einer Regelvorrichtung der Abzugsgeschwindigkeit und/oder der Extruderdrehzahl zugeführt sind.

Mit dieser Möglichkeit werden dann alle Dimensionen des Schlauchrohlinges über lange Betriebszeiten konstant gehalten. Dadurch wird es ermöglicht, erheblich an Material zu sparen und die Fertigung sehr wirtschaftlich zu gestalten.

Die Formung des Schlauchrohlings zur Durchführung der Höhen-und/oder Breitenmessung nimmt man zweckmäßigerweise zwischen mindestens zwei Walzen, vorzugsweise zwei Walzenpaaren vor.

Aufgrund kaum vermeidbarer Mischungsverschmutzung ist es vorteilhaft, das Schlauchausformen mit dem Mündungs-Strainern zu verbinden. Infolge der durch Verschmutzungen abnehmenden Durchlässigkeit der Siebe des Strainers nimmt bei derselben Schneckendrehzahl die Ausstoßleistung des Extruders ab, was bei ebenfalls unvermeidbarer Abzugsgeschwindigkeit zu einer Längen-, Gewichts- und Maßänderung des Extrudates führt. Es ist daher zweck mäßig, das Längengewicht des Schlauches mit einer geeigneten Waage zu erfassen und bei Abweichungen vom Sollwert die Abzugsgeschwindigkeit oder die Extruder-Drehzahl entsprechend zu korrigieren.

Das Wesen der vorliegenden Erfindung ist nachstehend anhand von in der Zeichnung schematisch dargestellten Ausführungsbeispielen näher erläutert. Es zeigen:

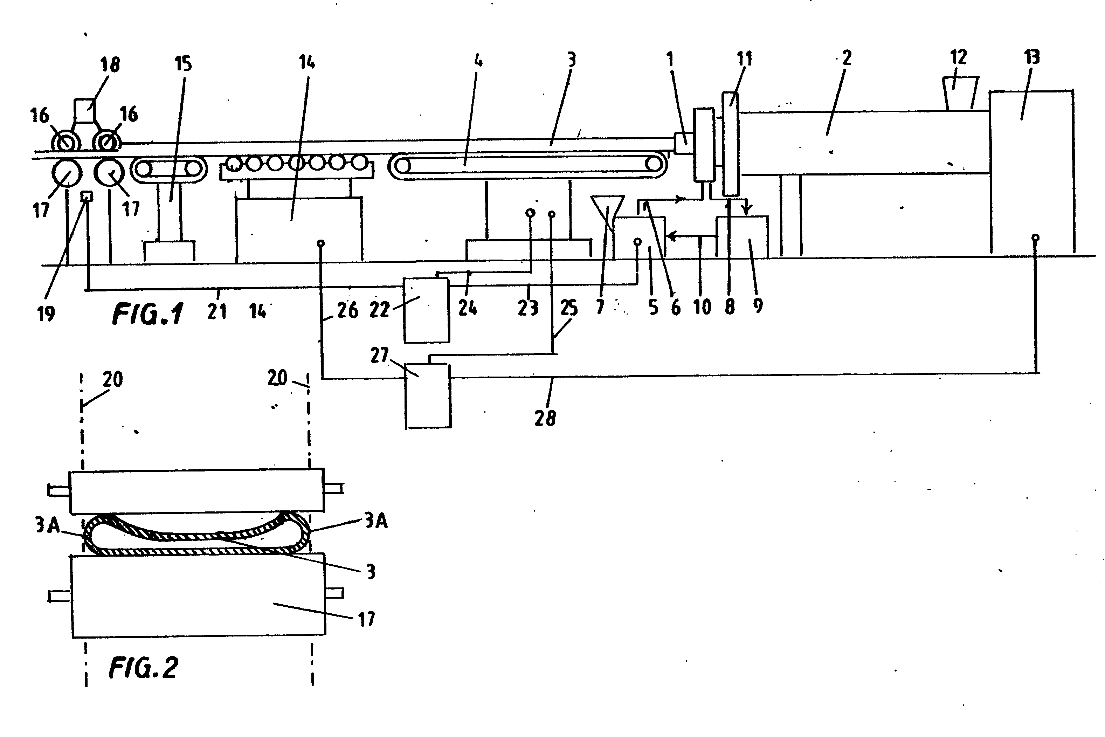

Fig. 1 eine Seitenansicht der Vorrichtung der Herstellung dünnwandiger Schläuche,

Fig. 2 einen Querschnitt des Schlauches zwischen zwei Walzenpaaren.

Aus dem Spritzkopf 1 des Extruders 2 tritt ein Schlauchrohling 3 aus, der von der Abzugsvorrichtung 4 abgezogen und weitergefördert wird. Der Schlauchrohling 3 ist mit Luft gefüllt, die durch den nicht sichtbaren Dorn im Spritzkopf 1 aus der Drucklufterzeugungsvorrichtung 5 über die Druckluftleitung 6 zugeführt wird. In dieser Drucklufterzeugungsvorrichtung 5 wird die durch die Leitung 6 hindurchgeschickte Luft mit Puder gemischt, der über den Einfülltrichter 7 zugeführt wird. Der Überdruck der in der Drucklufterzeugungsvorrichtung 5 erzeugten Druckluft ist relativ gering, er liegt in der Größenordnung von wenigen Hekto-Pascal. Die überschüssige Luft wird aus dem Schlauchrohling durch die Leitung 8 abgezogen und in eine Vorrichtung 9 geführt, die einen regelbaren Unterdruckerzeuger enthält. Diese Abluftvorrichtung 9 kann mit der Drucklufterzeugungsvorrichtung 5 durch eine Leitung 10 verbunden sein.

Unmittelbar hinter dem Spritzkopf 1 ist zweckmäßigerweise noch eine nicht dargestellte Vorrichtung für die Bepuderung der Außenfläche des Schlauchrohlings 3 vorgesehen.

Im Spritzkopf 1 befinden sich Siebe, die mit einer Siebwechselvorrichtung 11 wechselbar sind. Die zu extrudierenden Mischungen werden in den Extruder 2 durch den Trichter 12 in kaltem Zustand eingeführt, der Antrieb der Extruderschnecke ist in dem Gehäuse 13 untergebracht.

Hinter der Abzugsvorrichtung 4 ist eine Längengewichtswaage 14 angeordnet und hinter dieser eine weitere Transportvorrichtung 15 in Form eines Transportbandes. Anschließend sind zwei Walzenpaare 16, 17 angeordnet, von denen jeweils die untere Walze als Unterlagenwalze 17 dient, während die obere Walze 16 den Schlauchrohling 3 in bestimmter Weise formt. Zwischen den beiden Walzenpaaren 16, 17 ist eine Breitenmeßvorrichtung angeordnet, die jeweils aus einem Lichtsender 18 und Lichtempfängern 19 besteht. Ein Teil dieser Lichtempfänger 19 wird durch den Schlauchrohling 3 von Lichteinstrahlung abgedeckt. Der zu den Lichtempfängern durchgehende Randstrahl 20 markiert jeweils die Lage des Randes des geringfügig zusammengedrückten Schlauchrohlings 3. Der Schlauchrohling wird hierdurch auf eine definierte Höhe gebracht, während er sich zu beiden Seiten frei ausbreiten kann. Diese Ausbreitung kann durch die Breitenmessung mittels der Randstrahlen 20 gemessen werden. Dadurch kann die Umfangslänge bestimmt werden. Das aus den Lichtempfängern 19 erhaltene Signal über die Breite des Schlauchrohlings 3 wird über die Lei tung 21 der Regelvorrichtung 5 zugeführt. Ein Ausgang dieser Regelvorrichtung 5 ist über die Leitung 23 mit der Druckluftsteuerung der Drucklufterzeugungsvorrichtung 5 verbunden. Dabei muß die Breitenänderung durch Regelung der normalerweise konstant zu haltenden Luft, die durch das sich verschmutzende Puderfilter hindurchgeht, erfolgen. Wird nicht eine Regelung der Zuluft vorgenommen, so kann eine Abluftregelung erfolgen. In der Abluftvorrichtung 9 ist dann entweder ein Ventil oder eine Absaugvorrichtung zu steuern. Oftmals ist es zweckmäßiger, die Abluft zu regeln, da eine Zuluftregelung die Puderung beeinflussen kann. Ein anderer Ausgang der Steuervorrichtung 22 ist über die Leitung 24 mit dem Antrieb 25 der Abzugsvorrichtung 4 verbunden.

Der Ausgang für die Meßsignale aus der Längengewichtswaage 14 ist über die Leitung 26 mit einer weiteren Steuerungsvorrichtung 27 verbunden, deren Ausgang über die Leitung 28 mit dem Antrieb 25 der Abzugsvorrichtung 4 verbunden ist und/oder über die Leitung 29 mit dem Antrieb 13 für den Schneckenextruder 2.

Liste der Bezugzeichen:

1 Spritzkopf
2 Extruder
3 Schlauchrohling
4 Abzugsvorrichtung
5 Drucklufterzeugung
6 Druckluftleitung
7 Einfülltrichter für Puder
8 Leitung
9 Ablüftvorrichtung
10 Leitung
11 Siebwechselvorrichtung
12 Einfülltrichter
13 Extruderantrieb
14 Längengewichtswaage
15 Transportvorrichtung
16 Formungswalze
17 Unterlagenwalze
18 Lichtsender
19 Lichtempfänger
20 Randstrahl
21 Leitung
22 Steuervorrichtung
23 Leitung
24 Leitung
25 Antrieb
26 Leitung
27 Steuerungsvorrichtung
28 Leitung
29 Leitung

## Ansprüche

1. Vorrichtung für die Herstellung dünnwandiger Schläuche aus Kautschuk- und/oder Kunststoffmischungen, bestehend aus einem Extruder mit einem Spritzkopf, einer Abzugsvorrichtung und einer Meßvorrichtung, bei der im Spritzkopf Leitungen für die Zufuhr puderbeladener Druckluft und die Abfuhr überschüssiger Luft vorgesehen sind,
dadurch gekennzeichnet,
daß die Meßvorrichtung für die Messung der Breite und/oder Höhe ausgelegt ist,
daß das schlauchförmige, luftgefüllte Extrudat (3) hinter der Abzugsvorrichtung (4) im Bereich der Meßvorrichtung (18, 19) durch Formwerkzeuge (16,17) geführt ist,
und daß der Ausgang der Meßvorrichtung (18, 19) mit einer Regelvorrichtung (22) für die Menge der in den extrudierten Schlauch (3) eingeführten und/oder aus dem extrudierten Schlauch (3) durch die Abluftvorrichtung (9) abesaugten Luft und/oder der Geschwindigkeit der Abzugsvorrichtung (4) verbunden ist.

2. Vorrichtung nach Anspruch 1,
bei der im Bereich des Ausganges des Extruders eine Siebvorrichtung angeordnet ist,
dadurch gekennzeichnet,
daß zwischen der Abzugsvorrichtung (4) und der Meßvorrichtung (18, 19) eine Längengewichtswaage (14) angeordnet ist,
deren Ausgangssignale einer Regelvorrichtung (27) der Abzugsgeschwindigkeit und/oder der Extruderdrehzahl zugeführt sind.

3. Vorrichtung nach Anspruch 1,
dadurch gekennzeichnet,
daß das Formwerkzeug aus mindestens zwei Walzen (16, 17), vorzugsweise aus zwei Walzenpaaren, besteht.

4. Verfahren zur Herstellung dünnwandiger Schläuche aus Kautschuk- und/oder Kunststoffmischungen durch Extrudieren und Abziehen,
bei dem mit Puder beladene Druckluft in das Innere des Schlauches ständig eingeführt und nach einer Verweilzeit wieder herausgeführt wird,
und bei dem die Außenfläche des Schlauches bepudert wird,
dadurch gekennzeichnet,
daß man dem extrudierten, luftgefüllten Schlauch über einen Teil seines Umfanges eine bestimmte Form gibt und an den nicht mit den Formwerkzeugen in Berührung befindlichen Teilen eine Messung der Breite und/oder Höhe vornimmt,
und daß man das Ergebnis dieser Messung der Regelung des Stützluftdruckes und/oder der Abzugsgeschwindigkeit zugrundelegt.

5. Verfahren nach Anspruch 4,
bei dem man im oder vor dem Spritzkopf das zu extrudierende Material durch Siebe reinigt,
dadurch gekennzeichnet,
daß man das Längengewicht des extrudierten Schlauches mißt, mit einem Sollwert vergleicht und die Abweichung der Regelung der Abzugsgeschwindigkeit und/oder der Extruderdrehzahl zugrundelegt.

6. Verfahren nach Anspruch 5,
dadurch gekennzeichnet,
daß man die Formung des Schlauches für die Breiten-und/oder Höhenmessung zwischen mindestens zwei Walzen, vorzugsweise zwei Walzenpaaren, vornimmt, deren Achsabstand so gewählt ist, daß die Teile der Oberfläche der Schlauchwandung berührungslos zwischen den Walzen durchlaufen.

FIG.1

FIG.2